# EUROPÄISCHE PATENTSCHRIFT

(11) **EP 1 535 761 B1**
(45) Veröffentlichungstag und Bekanntmachung des Hinweises auf die Patenterteilung: **02.11.2006**
(21) Anmeldenummer: 03027249.6
(22) Anmeldetag: 27.11.2003
(51) Int. Cl.: B60C 15/00, B60C 9/04, B60C 9/09, B60C 15/06

(54) **Fahrzeugluftreifen**
Pneumatic tire
Bandage pneumatique

(43) Veröffentlichungstag der Anmeldung: 01.06.2005
(73) Patentinhaber: Continental Aktiengesellschaft, 30165 Hannover (DE)
(72) Erfinder: van Barneveld, Claus, 30827 Garbsen (DE); Breyhan, Thees, 38274 Elbe (DE); Dehner, Jörg, 31535 Neustadt (DE); Mauruschat, Rainer, 30826 Garbsen (DE)

(56) Entgegenhaltungen:
- EP-A- 0 344 086
- EP-A- 0 483 710
- EP-A- 0 650 855
- EP-A- 1 142 731

## Beschreibung

Die Erfindung betrifft einen Fahrzeugluftreifen mit einem Laufstreifen, Seitenwänden, einem Gürtelverband aus zumindest zwei Gürtellagen und einer Bandage, Wulstbereichen mit Wulstkernen und Kernprofilen sowie mit einer zumindest einlagigen Karkasse, welche von innen nach außen um die Wulstkerne und die Kernprofile geführt ist, und mit zumindest einer Verstärkungslage in jeder Seitenwand, welche Verstärkungslage innenseitig der Karkasse um das Kernprofil und den Wulstkern verläuft.

Ein solcher gattungsgemäßer Reifen ist aus der EP-A-0 344 086 bekannt.

Es ist bekannt, in PKW-Radialreifen, die für das Fahren mit sehr hohen Geschwindigkeiten geeignet sind, zur Verbesserung der Hochgeschwindigkeitsbelastbarkeit die Seitenwände mit Verstärkungslagen zu versteifen. Bei einem derart ausgeführten bekannten PKW-Radialreifen ist in jeder Seitenwand eine Verstärkungslage angeordnet, die an der Karkasse anliegend um die Kernprofile und die Wulstkerne verläuft. Innenseitig endet bei dieser bekannten Anordnung jede Verstärkungslage in einer Höhe, die radial außerhalb der halben maximalen Querschnittshöhe des Reifens liegt. Dieses Ende liegt jedenfalls näher zum Gürtel als der andere äußere Endbereich der Verstärkungslage.

Der Erfindung liegt die Aufgabe zu Grunde, die Hochgeschwindigkeitsbelastbarkeit eines derartigen Reifens sowie auch die Dauerhaltbarkeit des Reifens im Bereich der Seitenwände weiter zu verbessern.

Gelöst wird die gestellte Aufgabe erfindungsgemäß durch die Merkmale des Kennzeichens des Anspruch 1.

Es hat sich herausgestellt, dass PKW-Radialreifen mit erfindungsgemäß versteiften Seitenwänden eine deutlich verbesserte Hochgeschwindigkeitsbelastbarkeit und eine höhere Dauerhaltbarkeit aufweisen. Darüber hinaus lässt sich vor allem bei Reifen mit einer sehr geringen Querschnittshöhe mit derart angeordneten Verstärkungslagen das Handlingverhalten des Reifens positiv beeinflussen.

Um die Hochgeschwindigkeitseigenschaften des Reifens optimal zu verbessern, ist es ferner von Vorteil, wenn der in jeder Seitenwand innenseitig verlaufenden Bereich der Verstärkungslage bis unter den Randbereich des Gürtels reicht.

Die Hochgeschwindigkeitsbelastbarkeit des Reifens wird ferner dadurch optimiert, dass die Karkasse in einer C-Lage angeordnet ist und somit mit ihrem äußeren Bereichen ebenfalls bis unter die Randbereiche des Gürtels reicht.

Um die Erwärmung des Reifens bei sehr hohen Geschwindigkeiten möglichst gering zu halten, ist es ferner von Vorteil, wenn der unten den Randbereich des Gürtels reichende Bereich der Verstärkungslage vor dem unter den Randbereich des Gürtels reichenden Bereich der Karkasse endet.

Bei einer bevorzugten Ausführungsform können in jeder Seitenwand zwei Verstärkungslagen quasi als Doppellage angeordnet sein.

Die Festigkeitsträger der Verstärkungslage bestehen insbesondere aus einem textilen Material, beispielsweise aus Aramid oder Rayon, oder aus Stahl. Auf die versteifende Wirkung der Verstärkungslage wirkt es sich ferner günstig aus, wenn die Festigkeitsträger der Verstärkungslage die Festigkeitsträger der Karkasse, insbesondere unter einem Winkel von 30° bis 60°, kreuzen. Grundsätzlich kann der Winkel zwischen den Festigkeitsträgern der Verstärkungslage und den Festigkeitsträgern der Karkasse zwischen 0° und 80° gewählt werden.

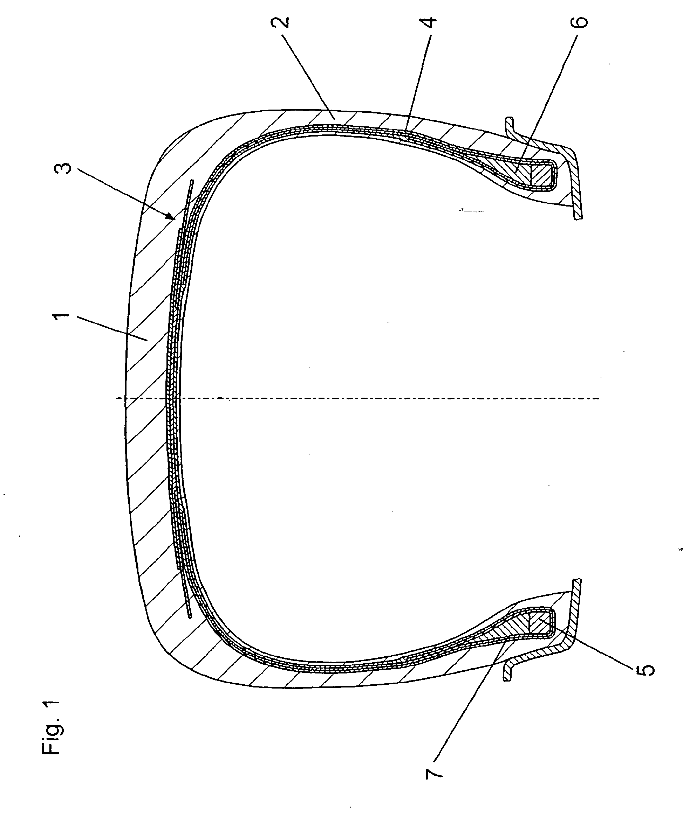

Weitere Merkmale, Vorteile und Einzelheiten der Erfindung werden anhand der Zeichnung, die ein Ausführungsbeispiel darstellt, näher beschrieben. Dabei zeigt die einzige Zeichnungsfigur, Fig. 1, einen Querschnitt durch einen erfindungsgemäß ausgeführten Fahrzeugluftreifen.

Der in Fig. 1 im Querschnitt gezeigte Fahrzeugluftreifen ist ein PKW - Radialreifen, insbesondere ein Niederquerschnittsreifen, welcher für das Fahren bei sehr hohen Geschwindigkeiten geeignet ist. Ein erfindungsgemäß ausgeführter Reifen ist mit besonders angeordneten Seitenwandverstärkungen, wie im Folgenden näher beschrieben wird, versehen.

Zu den wesentlichen Bauteilen eines erfindungsgemäß ausgeführten Fahrzeugluftreifens gehört ein Laufstreifen 1, welcher mit einer nicht dargestellten Laufstreifenprofilierung versehen ist, eine Gürtelverstärkung 3 aus mehreren, beispielsweise aus zwei Gürtellagen, und aus einer insbesondere mehrlagigen, nicht dargestellten Gürtelbandage, eine insbesondere einlagig ausgeführte Karkasse 4, Wulstkerne 5, radial außerhalb der Wulstkerne 5 angeordnete Kernprofile 6 sowie Seitenwände 2. Diese Bestandteile des Reifens können in herkömmlicher Weise angeordnet und ausgeführt sein. Die beiden Gürtellagen können daher in bekannter Weise aus in Gummi eingebetteten Stahlcorden bestehen, wobei die Stahlcorde innerhalb einer Lage parallel zueinander verlaufen, die Stahlcorde der einen Lage jedoch die Stahlcorde der anderen Gürtellage kreuzen. Dabei schließen die Stahlcorde mit der Umfangsrichtung des Reifens einen Winkel, der im Bereich zwischen 10° und 40° gewählt wird, ein. Die Gürtelbandage kann eine sogenannte Spulbandage mit in Umfangsrichtung verlaufenden Festigkeitsträgern, beispielsweise aus Nylon, sein.

Die Wulstkerne 5 sind bevorzugt Stahlkerne, die Kernprofile 6, welche auch Apex genannt werden, bestehen aus einer eher harten Gummimischung. Die Karkasse 4, die in eine Gummimischung eingebettete Festigkeitsträgern aus einem textilen Material oder aus Stahlcord aufweist, die in radialer Richtung orientiert sind, ist von innen kommend um die Wulstkerne 5 und die Kernprofile 6 herumgeführt und entlang der Seitenwände 2 bis unter die Randbereiche des Gürtel 3 reichend rückgeführt. Bei der dargestellten Ausführungsform ist daher die Karkasse 4 in einer sogenannten C-Lage angeordnet.

Gemäß der Erfindung ist in jeder Seitenwand 2 zwischen dem weiter innen verlaufenden und dem weiter außen verlaufenden Bereich der Karkasse 4 eine Verstärkungslage 7 angeordnet. Jede Verstärkungslage 7 umläuft das betreffende Kernprofil 6 und den betreffenden Wulstkern 5 an der Karkasse 4 und diesen Teilen anliegend. Der im Reifen innenseitig gelegene Bereich jeder Verstärkungslage 7 reicht über das radial äußere Ende des Kernprofils 6 hinaus und endet vorzugsweise in einer Höhe, die 30% bis 60% der maximalen Querschnittshöhe H des Reifens beträgt. Die Querschnittshöhe H wird dabei bei auf einer Felge aufgebrachten, unbelasteten und unter normalen Innendruck gesetzten Reifen ermittelt und bezieht sich auf das Wulstzehenende, wie in Fig. 1 gezeigt. Der außenseitig verlaufende Bereich jeder Verstärkungslage 7 ist zwischen den beiden Bereichen der Karkasse 4 verlaufend bis unter den Randbereich des Gürtel 3 reichend geführt, endet jedoch bevorzugt axial weiter außen als der hier befindliche Endbereich der Karkasse 4. Auch der innenseitig verlaufende Bereich jeder Verstärkungslage 7 kann bis unter den Gürtelrandbereich reichen.

Die Verstärkungslage 7 weist in eine Gummimischung eingebettete, hochmodulige, textile oder metallische Festigkeitsträger auf, welche mit den Festigkeitsträgern der Karkasse 4 bevorzugt einen Winkel in der Größenordnung zwischen 30 und 60° einschließen. Grundsätzlich ist eine Winkelung der Festigkeitsträger der Verstärkungslagen 7 zu den Festigkeitsträgern der Karkasse 4 unter jedem Winkel zwischen 0° und 80° möglich. Als Material für die textilen Festigkeitsträger der Verstärkungslagen 7 eignen sich beispielsweise Aramid oder Rayon. Erwähnt sei ferner, dass die Festigkeitsträger der Karkasse 4 auch unter einem von der radialen Richtung bis zu 30° abweichenden Winkel verlaufen können.

Abweichend von der dargestellten Ausführungsform können in jeder Seitenwand zwei Verstärkungslagen, insbesondere als zumindest im Wesentlichen übereinstimmend angeordnete Doppellagen, vorgesehen werden. Die Karkasse kann auch auf andere Weise im Fahrzeugreifen angeordnet sein, beispielsweise mit einem in jeder Seitenwand endenden Hochschlag.

## Patentansprüche

1. Fahrzeugluftreifen mit einem Laufstreifen, Seitenwänden, einem Gürtelverband aus zumindest zwei Gürtellagen und einer Bandage, Wulstbereichen mit Wulstkernen und Kernprofilen sowie mit einer zumindest einlagigen Karkasse, welche von innen nach außen um die Wulstkerne und die Kernprofile geführt ist, und mit zumindest einer Verstärkungslage in jeder Seitenwand, welche Verstärkungslage ebenfalls um das Kernprofil und den Wulstkern verläuft und einen axial inneren und einen axial äußeren Abschnitt aufweist, wobei der axial innere Abschnitt außenseitig des axial weiter innen verlaufenden Abschnittes der Karkasse und der axial äußere Abschnitt innenseitig des axial weiter außen verlaufenden Abschnittes der Karkasse verläuft,
**dadurch gekennzeichnet,**
**dass** der axial äußere Abschnitt der Verstärkungslage (7) bis unter den Randbereich des Gürtels (3) reicht, und dass der axial innere Abschnitt der Verstärkungslage (7) entweder in einer Höhe endet, welche zwischen 30 und 60 % der maximalen Querschnittshöhe des Reifens beträgt, oder ebenfalls bis unter den Randbereich des Gürtels (3) reicht.

2. Fahrzeugluftreifen nach Anspruch 1, **dadurch gekennzeichnet, dass** die Karkasse in einer C-Lage angeordnet ist und somit mit ihren axial äußeren Abschnitten ebenfalls bis unter die Randbereiche des Gürtels (3) reicht.

3. Fahrzeugluftreifen nach Anspruch 1 oder 2, **dadurch gekennzeichnet, dass** der unter den Randbereich des Gürtels (3) reichende Abschnitt der Verstärkungslage (7) vor dem unter den Randbereich des Gürtels (3) reichenden Abschnitt der Karkasse (4) endet.

4. Fahrzeugluftreifen nach einem der Ansprüche 1 bis 3, **dadurch gekennzeichnet, dass** in jeder Seitenwand (2) zwei Verstärkungslagen (7) als Doppellage angeordnet sind.

5. Fahrzeugluftreifen nach einem der Ansprüche 1 bis 4, **dadurch gekennzeichnet, dass** die Festigkeitsträger der Verstärkungslage (7) aus einem textilen Material oder aus Stahl bestehen.

6. Fahrzeugluftreifen nach Anspruch 5, **dadurch gekennzeichnet, dass** die Festigkeitsträger der Verstärkungslage (7) aus Aramid oder Rayon bestehen.

7. Fahrzeugluftreifen nach einem der Ansprüche 1 bis 6, **dadurch gekennzeichnet, dass** die Festigkeitsträger der Verstärkungslage (7) mit den Festigkeitsträgern der Karkasse (4) einen Winkel zwischen 0° und 80° einschließen.

8. Fahrzeugluftreifen nach einem der Ansprüche 1 bis 7, **dadurch gekennzeichnet, dass** die Festigkeitsträger der Verstärkungslage (7) mit den Festigkeitsträgern der Karkasse (4) einen Winkel zwischen 30° und 60° einschließen.

## Claims

1. Pneumatic vehicle tyre with a tread rubber, sidewalls, a belt assembly comprising at least two belt plies and a bandage, bead regions with bead cores and core profiles and also with an at least single-ply carcass, which is taken from the inside to the outside around the bead cores and the core profiles, and with at least one reinforcing ply in each sidewall, which reinforcing ply likewise runs around the core profile and the bead core and has an axially inner portion and an axially outer portion, the axially inner portion running outside the portion of the carcass that runs further inwards in the axial direction and the axially outer portion running inside the portion of the carcass that runs further outwards in the axial direction, **characterized in that** the axially outer portion of the reinforcing ply (7) reaches under the edge region of the belt (3), and **in that** the axially inner portion of the reinforcing ply (7) ends either at a height which is between 30 and 60% of the maximum cross-sectional height of the tyre, or likewise reaches under the edge region of the belt (3).

2. Pneumatic vehicle tyre according to Claim 1, **characterized in that** the carcass is arranged in a C position, and consequently likewise reaches with its axially outer portions under the edge regions of the belt (3).

3. Pneumatic vehicle tyre according to Claim 1 or 2, **characterized in that** the portion of the reinforcing ply (7) reaching under the edge region of the belt (3) ends before the portion of the carcass (4) reaching under the edge region of the belt (3).

4. Pneumatic vehicle tyre according to one of Claims 1 to 3, **characterized in that** two reinforcing plies (7) are arranged in each sidewall (2) as a double ply.

5. Pneumatic vehicle tyre according to one of Claims 1 to 4, **characterized in that** the reinforcing elements of the reinforcing ply (7) consist of a textile material or of steel.

6. Pneumatic vehicle tyre according to Claim 5, **characterized in that** the reinforcing elements of the reinforcing ply (7) consist of aramid or rayon.

7. Pneumatic vehicle tyre according to one of Claims 1 to 6, **characterized in that** the reinforcing elements of the reinforcing ply (7) form an angle of between 0° and 80° with the reinforcing elements of the carcass (4).

8. Pneumatic vehicle tyre according to one of Claims 1 to 7, **characterized in that** the reinforcing elements of the reinforcing ply (7) form an angle of between 30° and 60° with the reinforcing elements of the carcass (4).

## Revendications

1. Bandage pneumatique pour véhicule comprenant une bande de roulement, des parois latérales, une bande de ceinture constituée d'au moins deux nappes de ceinture et d'un bandage, des zones de talon avec des tringles et des profilés de tringle ainsi qu'une carcasse au moins monocouche, qui est guidée de l'intérieur vers l'extérieur autour des tringles et des profilés de tringles, et comprenant au moins une couche de renforcement dans chaque paroi latérale, laquelle couche de renforcement s'étend également autour du profilé de tringle et des tringles et présente une portion axialement interne et une portion axialement externe, la portion axialement interne s'étendant du côté extérieur de la portion de la carcasse s'étendant axialement davantage vers l'intérieur et la portion axialement externe s'étendant du côté intérieur de la portion de la carcasse s'étendant axialement davantage vers l'extérieur,
**caractérisé en ce que**
la portion axialement extérieure de la couche de renforcement (7) s'étend jusqu'en dessous de la région de bord de la ceinture (3), et **en ce que** la portion axialement interne de la couche de renforcement (7) se termine à une hauteur qui vaut entre 30 et 60% de la hauteur maximale en section transversale du pneumatique, ou s'étend également jusqu'en dessous de la région de bord de la ceinture (3).

2. Bandage pneumatique pour véhicule selon la revendication 1, **caractérisé en ce que** la carcasse est disposée suivant une couche en C et s'étend ainsi avec ses portions axialement externes également jusqu'en dessous de la région de bord de la ceinture (3).

3. Bandage pneumatique pour véhicule selon la revendication 1 ou 2, **caractérisé en ce que** la portion de la couche de renforcement (7) s'étendant en dessous de la région de bord de la ceinture (3) se termine avant la portion de la carcasse (4) s'étendant sous la région de bord de la ceinture (3).

4. Bandage pneumatique pour véhicule selon l'une quelconque des revendications 1 à 3, **caractérisé en ce que** dans chaque paroi latérale (2) sont disposées deux couches de renforcement (7) sous forme de double couche.

5. Bandage pneumatique pour véhicule selon l'une quelconque des revendications 1 à 4, **caractérisé en ce que** les renforcements de la couche de renforcement (7) se composent d'un matériau textile ou de métal.

6. Bandage pneumatique pour véhicule selon la revendication 5, **caractérisé en ce que** les renforcements de la couche de renforcement (7) se composent d'aramide ou de rayonne.

7. Bandage pneumatique pour véhicule selon l'une quelconque des revendications 1 à 6, **caractérisé en ce que** les renforcements de la couche de renforcement (7) forment avec les renforcements de la carcasse (4) un angle compris entre 0° et 80°.

8. Bandage pneumatique pour véhicule selon l'une quelconque des revendications 1 à 7, **caractérisé en ce que** les renforcements de la couche de renforcement (7) forment avec les renforcements de la carcasse (4) un angle compris entre 30° et 60°.
